(19) Europäisches Patentamt / European Patent Office / Office européen des brevets

(11) **EP 4 012 358 A1**

(12) **EUROPÄISCHE PATENTANMELDUNG**

(43) Veröffentlichungstag:
**15.06.2022 Patentblatt 2022/24**

(21) Anmeldenummer: 20213064.7

(22) Anmeldetag: **10.12.2020**

(51) Internationale Patentklassifikation (IPC):
**G01G 15/00** (2006.01)  **B65G 54/02** (2006.01)

(52) Gemeinsame Patentklassifikation (CPC):
**G01G 15/00; B65G 54/02**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Mettler-Toledo Garvens GmbH
31180 Giesen (DE)**

(72) Erfinder: **Eggers, Markus
31180 Giesen (DE)**

(74) Vertreter: **Mettler-Toledo
IP Department
Im Langacher 44
8606 Greifensee (CH)**

(54) **PRODUKTTRANSPORT IN DYNAMISCHEN INSPEKTIONSSYSTEMEN**

(57) Transportvorrichtung (200, 300, 400) zum Transport von Produkten (P) aufweisend: eine Ultraschallanregungseinheit (210) mit einem Generator (211, 311, 411) zur Erzeugung einer elektrischen Wechselspannung und einem Wandler (212, 312, 412, 512, 612, 1012, 1112) zur Umwandlung der elektrischen Wechselspannung in eine mechanische Schwingung; und aufweisend mindestens ein Schwinggebilde (220, 320, 420, 520, 620, 920), welches eine Kontaktzone (341, 441, 541, 641) aufweist über die die Produkte (P) von einem Anfang der Transportvorrichtung (200) in Transportrichtung (T) an das Ende der Transportvorrichtung (200) transportiert werden; wobei das Schwinggebilde (220, 320, 420, 520, 620, 920) derart ausgestaltet und mit der Ultraschallanregungseinheit (210) verbunden ist, dass die Schwingungsamplituden der von der Ultraschallanregungseinheit (210) übertragenen mechanischen Schwingung an der Kontaktzone (341, 441, 541, 641) quer zur Transportrichtung (T) auftreten.

Fig. 2

EP 4 012 358 A1

**Beschreibung**

**Technisches Gebiet**

Die Erfindung betrifft eine Transportvorrichtung zum Transport von Gegenständen, sowie eine Transporteinheit, eine Gewichtsprüfvorrichtung und ein Inspektionssystem, insbesondere eine Kontrollwaage, mit mindestens einer solchen Transportvorrichtung.

**Stand der Technik**

Eine dynamische Kontrollwaage ist ein System, das Wägegüter verwiegt, während sie innerhalb einer Produktionslinie über die Waage geführt werden. Die Wägegüter können weiter in vorgegebene Gewichtsklassen klassiert und entsprechend der Gewichtsklassierung sortiert oder ausgeschleust werden. Einsatzgebiete von Kontrollwaagen sind vielseitig und umfassen zum Beispiel:

- Prüfung auf Unter- bzw. Übergewicht von Produkten
- Einhaltung der gesetzlichen Bestimmungen für den Nettoinhalt von verpackten Gütern
- Reduzierung von Produktverschwendungen durch Verwendung der mittels der Kontrollwaage gewonnenen Gewichtswerte zur Einstellung der Füllmaschinen
- Klassierung von Produkten nach Gewicht
- Messung und Aufzeichnung der Leistung der Produktionsanlage bzw. Produktionslinie
- Stückzahl-Verifizierung anhand des Gewichts

Mit Kontrollwaagen werden 100% der Produkte einer Produktlinie gewogen. So werden dann auch die gesamten Produktionsdaten gesammelt für Produktzählung oder für die Produktionsstatistik.

Eine Kontrollwaage, oder auch Kontrollwägesystem genannt, besteht üblicherweise aus einem Zuführband, einem Wägeband, und einem Abführband. Zusätzlich kann ein Kontrollwägesystem eine Sortiereinrichtung und ein Wägeterminal mit Benutzerschnittstelle aufweisen. Das zwischen Zu- und Abführband gelegene Wägeband ist auf einem Wägemodul mit einer Wägezelle gelagert, welche das Gewicht des Produkts beim Überfahren des Wägebandes dynamisch erfasst. Die zwei am häufigsten verwendeten Wägetechnologien für Kontrollwaagen sind Wägezellen mit Dehnungsmessstreifen (DMS) oder nach dem Prinzip der elektromagnetischen Kraftkompensation (EMFR) arbeitende Wägezellen. Nach ihrem Transport über das Wägeband werden die Produkte von einem dem Wägeband nachgeschalteten Abführband abtransportiert. Durch die dynamische Wägung werden fehlgewichtige Produkte erkannt und von einer Aussortiervorrichtung in der Regel quer zu dem in der Längsrichtung stattfindenden Transport der Produkte ausgestossen.

Fördereinrichtungen herkömmlicher Kontrollwaagen der vorstehend beschriebenen Art weisen üblicherweise eine sogenannte Laufrollenkonstruktion auf. Derartige Fördereinrichtungen weisen eine Antriebsrolle und mindestens eine Laufrolle umlaufendes Förderband auf, wobei sowohl die Antriebsrolle als auch die Laufrolle konstruktiv als Umlenkrollen ausgebildet sind. Die Drehbewegung der Rollen kann dabei sowohl auf einer gelagerten Welle als auch Achse stattfinden. Bezüglich der Achse wird dabei die Drehbewegung durch in der Laufrolle selbst untergebrachte Kugellager ermöglicht. Die Konstruktion ist kostengünstig und zum dynamischen Wiegen geeignet. Nachteilhaft dabei ist allerdings, dass sich dadurch systembedingte Störungen und Einschränkungen wie unwuchtbehaftete rotierende Massen, Lücken an den Bandübergängen zu Zu- und Abführbändern sowie eine erhöhte Vorlast und Platzbedarf durch die Vielzahl an Komponenten ergibt. Zusätzliche Bauteile können beispielsweise der Spurhaltung des Gurtes dienen, der Sicherheit oder Schmutzabweisung.

Bisher sind dynamische Kontrollwaagen so aufgebaut, dass die Produktfördereinrichtung durch einen elektrisch betriebenen Motor angetrieben wird. Diese Methode findet beispielsweise in Leichttransportbandlösungen oder Kettenfördersystemen Anwendung. Dabei bilden das Wägeband und die Antriebseinheit eine Baugruppe, die komplett vom Wägemodul getragen wird. In EP 1 952 104 A1 und WO 2007 057 000 A1 wird das Problem angegangen, die Energieversorgung des Antriebs so zu gestalten, dass der Einfluss auf die Transportvorrichtung bzw. die gesamte Waage in mechanischer und messtechnischer Hinsicht minimiert wird. Weiter bieten sich Lösungen in der WO 2008 151 609 A1 an um Transportbandschwingungen, welche durch den Stoss des Endlosbandes verursacht werden, zu lösen, beispielsweise auch mit schräg verlaufenden Stossstellen aus der DE 20 2012 008 090 U1 oder schräg verlaufende Nähte oder auch mäanderförmig ausgeführte Stossstellen mit Aussparungen und Zungen. Die Verbindung der beiden Riemenenden erfolgt üblicherweise durch Nähen, Kleben oder Vulkanisieren.

Ebenso wie Kontrollwaagen gehören auch Metalldetektoren zu den Schlüsselkomponenten für eine effektive Qualitätssicherung. Der Einsatz von Metalldetektoren wird von gewerblichen Nutzern für die Suche nach metallischen Produktverunreinigungen genutzt. So zum Beispiel für Bleikugeln in Fleisch, Drahtteile in Getreide, Späne aufgrund von Reparaturen an der Produktionsanlage oder Verunreinigungen aus der Produktverarbeitung.

Bei einem industriellen Metalldetektionssystem handelt es sich um ein hoch entwickeltes Gerät, mit dem metallische Fremdkörper erkannt und aussortiert werden können. Die Detektierbarkeit schliesst eisenhaltige Metalle, auch Edelstähle und nichteisenhaltige Metalle, wie Messing, Kupfer, Aluminium und Blei, ein. Ein typisches Metalldetektionssystem besteht aus folgenden vier Hauptkomponenten: Suchkopf, Transportsystem, Bedieneinheit und einem automatischen Ausschleussystem.

Heutige Suchköpfe von Metalldetektoren können mehrheitlich durch zwei Suchtechnologien unterschieden und kategorisiert werden. Eine erste Kategorie von Suchköpfen ist mit symmetrischen Spulen ausgerüstet. Drei genau parallel zueinander angeordnete Spulen werden auf einen nichtmetallischen Grundkörper gewickelt. Durch die mittlere der drei Spulen fliesst ein hochfrequenter elektrischer Strom, der ein magnetisches Feld erzeugt. Die benachbarten Spulen wirken als Empfänger und dabei wird durch die symmetrische Anordnung, für den Fall, dass keine Metallverunreinigungen den Detektor passieren, eine identische Spannung induziert. Passiert ein Produkt mit Metallverunreinigung die Spulenanordnung wird zunächst das Frequenzfeld der ersten Empfängerspule und anschliessend das der zweiten Empfängerspule gestört. Dies ändert die induzierte Spannung in den Empfängerspulen und das resultierende Signal kann zur Detektion der Metallverunreinigung verarbeitet werden.

Der Suchkopf eines typischen Metalldetekors zur dynamischen Inspektion umschliesst dabei das Transportsystem, welches wiederum typischerweise eine Fördereinrichtungen der vorstehend für herkömmliche Kontrollwaagen beschriebenen Art ist und ebenfalls auf einer Laufrollenkonstruktion aufbaut. Die Teile des Transportsystems, welche sich relativ zum Suchkopf bewegen (rotierend oder translatorisch) haben einen Einfluss auf die Empfindlichkeit desselben und sollten daher möglichst vermieden werden.

Optische Inspektionssysteme werden zur Kontrolle von vielen qualitätsbeeinflussenden Merkmalen eingesetzt. Zum Beispiel sind Füllhöhen im Produktionsprozess sehr wichtig; die Überfüllung eines Behälters verschwendet das Produkt, die Unterfüllung kann zu Rückrufen führen. Genauso wichtig ist es, sicherzustellen, dass Deckel richtig aufgebracht werden. Ein zu hoch oder schräg stehender Deckel führt zu einem undichten Behälter, was schadhafte Produkte und Gewinnverluste nach sich zieht. Weiter stellt das Etikett das wichtigste Kommunikationsmittel zwischen Hersteller und Verbraucher dar. Es ist daher von grundlegender Bedeutung, dass die Informationen lesbar und zutreffend sind. Automatische optische Inspektionssysteme verhindern, dass Produkte mit unleserlichen, nicht richtig haftenden oder fehlenden Etiketten die Produktionsanlagen verlassen und stellen zuverlässig sicher, dass sich auf jedem Produkt das richtige Etikett befindet. Optische Inspektionssysteme überprüfen ausserdem die Lesbarkeit von Barcodes, um Produktrückrufe zu vermeiden.

Röntgen-Inspektionssysteme sind speziell auf die Erkennung unerwünschter Fremdkörper unabhängig von ihrer Form oder Position im Produkt ausgelegt. Mit einem solchen System kann man physische Verunreinigungen in einem Produkt erkennen, wie beispielsweise Glasscherben, Metall (selbst in Verpackungen aus Folie oder metallisierter Folie), Steine, bestimmte Kunststoff- und Gummiverbindungen und kalkhaltige Knochen (einschließlich Hühnerknochen), unabhängig von ihrer Größe, Form oder Position in der Verpackung.

Prinzipiell kann die vorliegende Erfindung in allen der oben aufgeführten Inspektionssystemen angewendet werden. Den grössten Nutzen stellt sich jedoch beim dynamischen Wiegen ein.

In dynamischen Kontrollwaagen gibt es, um die oben beschriebene Bauform zu umgehen, das Überführungsprinzip, bei dem ein Transportgurt oder ein Riemen oder eine Kette über eine starre Wägeplattform gezogen wird, so zum Beispiel in der EP 2 724 126 B1. Die Umlenkung des Gurtes und die Leistungsübertragung vom Motor finden an anderer Stelle statt, sodass diese nicht von der Wägezelle mitgewogen werden. Durch dieses Überführungsprinzip ergibt sich jedoch ein Kraftnebenschluss zwischen der Wägeplattform und den angrenzenden Transportbändern, da das Transportmedium einerseits im Bereich der Wägeplattform mit verwogen wird, andererseits aber auch gleichzeitig die nicht zu verwiegende Plattform der Zu- bzw. Abführung berührt..

Um im Bereich der Gewichtserfassung ganzheitlich auf ein Transportband zu verzichten, liegen Lösungen vor bei der eine starre Wägeplattform ausgebildet ist und infolgedessen das Produkt beim Überwinden dieses Bereichs eine Abbremsung erfährt, was zu einem verminderten Durchsatzvolumen führt. Mit geeigneten reibungsoptimierten Oberflächenmaterialien wird der Abbremsung entgegengewirkt. Die maximal zu überwindende Distanz ist hierbei zumindestvon der Objektgeschwindigkeit und Objektmasse begrenzt.

Für den Produkttransport über eine ebene Fläche durch Schwinganregung werden drei mögliche Antriebsmethoden unterschieden:

1. Levitation; beschreibt die schwebende Fortbewegung des Produkts. Ermöglicht wird sie beispielsweise durch stehende Wellen;

2. Propulsion; beschreibt Förderprinzipien, die durch eine aktive Bewegung das Produkt in Transportrichtung befördern;

3. Reibungsreduzierung; beschreibt die Minderung der zwischen zwei Körpern auftretenden Festkörperreibung durch Ultraschall.

Die hierin beschriebene Erfindung gehört zu der Antriebsmethode der Reibungsreduzierung.

Sonotroden sind Werkzeuge, die durch das Einleiten von hochfrequenten mechanischen Schwingungen (Ultraschall) in Resonanzschwingungen versetzt werden. Sie werden beim Ultraschallschweißen eingesetzt, um in den Füge- oder Kontaktzonen auf Grund verschiedener Prozesse eine dauerhafte Verbindung der Bauteile herzustellen. Weiterhin werden Booster verwendet, um z.B. beim Ultraschallschwingläppen die Schwingung auf das eigentliche, abbildende Werkzeug umzuformen beziehungsweise zu verstärken. Das in Schwingung versetzte Werkzeug wird fortan auch als Schwinggebilde bezeichnet.

Es sind ebenfalls Systeme bekannt, die mittels Ultraschall-Levitation große Bleche (DE 10 2007 016 840 A1) oder empfindliche Substrate wie Wafer (DE 10 039 482 A1) oder CD's handhaben bzw. transportieren können. Aus dem Dokument US 5,810,155 ist eine Transportvorrichtung bekannt, die nach dem Schalldruckprinzip arbeitet. Diese weist eine als Schwinggebilde ausgestaltete Förderplatte auf, an deren Anfangsabschnitt ein Schwingungserzeuger angekoppelt ist, der den Anfangsabschnitt der Förderplatte so anregt, dass eine Wanderwelle entsteht. Wenn auf der Förderplatte Gegenstände liegen, werden diese durch das von der Wanderwelle erzeugte wandernde Luftpolster zwischen der Förderplatte und der Grundfläche des zu befördernden Gegenstandes entlang der Förderplatte bewegt. Weitere Konstruktionen zu diesem Stand der Technik sind aus den Dokumenten DE 199 16 922, DE 199 16 923, DE 199 16 856 und DE 199 16 872 entnehmbar. Die oben genannten Systeme arbeiten alle mit dem Effekt der Luftpolsterbildung zwischen der Förderplatte und der zu befördernden Gegenständen, d.h. nach der oben beschriebenen Antriebsmethode 1.

Auf auf eine detailliertere Beschreibung kommerziell erhältlicher Piezomotoren, welche für den Antrieb nach Methode 2 verwendet werden, wird hier verzichtet. Nachfolgend werden aber zwei solcher Systeme exemplarisch dargestellt. Der von der Firma PiezoMotor entwickelte Piezo Legs Motor basiert auf der Kopplung zweiter parallel zueinander angeordneter Piezostapel, die mechanisch miteinander gekoppelt sind und im Läufer eine lineare Vorwärtsbewegung erzeugen. Der von der Firma Elliptec entwickelte Motor nutzt eine schlüsselförmige Metallstruktur um die von einem Piezoquader erzeugten Schwingungen in eine Biegeschwingung umzuformen. Dadurch wird an dem Kontaktpunkt zu einem Läufer oder Rotor eine stoßartige Bewegung erzeugt, die sich in eine Kontaktphase und Abhebephase unterteilt.

Die Grundkonstruktion einer Ultraschallanregungseinheit ist an den sogenannten "Langevin- Ultraschallwandler" angelehnt. Dieser findet in der Regel Anwendung in Ultraschallschweissstationen oder Ultraschallschneidanlagen. Hier wird der Effekt der Relativbewegung zwischen den Flächen zur Erzeugung von Wärme eingesetzt oder zur Reibungsreduzierung zwischen dem Schwinggebilde und dem Werkstück. Diese Reibungsreduzierung liegt als Grundgedanke dieser erfinderischen Transportvorrichtung zugrunde. Die nachfolgenden Überlegungen bauen auf dem trockenen Reibungsgesetz zwischen zwei Festkörpern auf, welches von Coulomb empirisch verifiziert wurde.

Neben der statischen Reibungskraft $F_S$ mit dem Haftreibungskoeffizienten $\mu_G$ tritt die kinetische Reibungskraft $F_R$ nach Überwindung der Haftung auf:

$$F_R = \mu_G \times F_N$$

Die Festkörperreibung ist im Allgemeinen ein sehr kompliziertes Phänomen, welches sich jedoch mit den Überlegungen von Coulomb für die meisten technischen Anwendungen hinreichend genau annähern lässt. Wesentliche Eigenschaften dieser Reibung sind:

- Proportionalität zur Normalkraft
- Unabhängigkeit zur Gleitgeschwindigkeit
- Keine Abhängigkeit zur Rauigkeit und Kontaktfläche der Oberflächen

Der vorliegenden Erfindung liegt daher die Aufgabe zugrunde, eine Transportvorrichtung bereit zu stellen, welche die Störungen auf den Inspektionsprozess, insbesondere den Wägeprozess, minimiert. Dabei soll auf unwuchtbehaftete und/oder rotierende Massen, welche die Messwertbildung beeinflussen, verzichtet werden.

Diese Aufgabe wird mit einer Vorrichtung gelöst, welche die in den unabhängigen Ansprüchen angegebenen Merkmale aufweist. Vorteilhafte Ausgestaltungen der Erfindung sind in den weiteren, abhängigen Ansprüchen angegeben.

## Kurzbeschreibung der Erfindung

Die Aufgabe wird gelöst durch eine Transportvorrichtung zum Transport von Produkten aufweisend: eine Ultraschallanregungseinheit mit einem Generator zur Erzeugung einer elektrischen Wechselspannung und einem Wandler zur Umwandlung der elektrischen Wechselspannung in eine mechanische Schwingung; und aufweisend mindestens ein Schwinggebilde, welches eine Kontaktzone aufweist über die die Produkte von einem Anfang der Transportvorrichtung in Transportrichtung an das Ende der Transportvorrichtung transportiert werden; wobei das Schwinggebilde derart ausgestaltet und mit der Ultraschallanregungseinheit verbunden ist, dass die Schwingungsamplituden der von der Ultraschallanregungseinheit übertragenen mechanischen Schwingung an der Kontaktzone quer zur Transportrichtung auftreten.

Die Vorteile dieser Transportvorrichtung liegen darin, dass keine das Wägeergebnis beeinflussenden, unwuchtbehafteten rotierenden Massen vorhanden sind, was unter anderem eine Verkürzung der Messwertbildung ermöglicht, und dass kein Kraftnebenschluss zur Wägeplatform entsteht. Durch die Relativbewegungen zwischen Gegenstand und Kontaktzone der Transportvorrichtung verringert sich der Abbremseffekt, d.h. die Produktabbremsung wird im Vergleich zu einer starren Plattform, z.B. einer Gleitplatte, stark reduziert, so dass längere Distanzen überbrückt werden können oder bei gleichbleibender Distanz der Produktdurchsatz erhöht werden kann.

Weiter kann die Ultraschallanregungseinheit ferner einen Booster zur Veränderung und Übertragung der mechanischen Schwingung aufweisen, wobei der Booster zwischen dem Wandler und dem Schwinggebilde angeordnet ist.

Vorteilhafterweise ist die Kontaktzone des Schwinggebildes als mindestens zwei in Transportrichtung verlaufende, vorzugsweise kufenförmige, Kontaktelemente ausgestaltet. Dadurch wird der gewünschte gegenläufige transversale Reibminderungseffekt nicht abgeschwächt. Diese Ausgestaltung der Erfindung beinhaltet die Konstruktion eines Schwinggebildes, dessen maximale Amplitude bewusst an zwei Geometrieflächen erzeugt wird.

Die einseitige Kufenkonstruktion zu der dem Gegenstand zugewandt liegenden Kontaktzone, oder im eingebauten Zustand der Oberseite, würde durch die unsymmetrische Massenverteilung zu einer starken Beeinflussung des longitudinalen Schwingungsmodus des Ultraschallwandlers führen. Deshalb ist es vorteilhaft die Kontaktelemente auch zu einer nach unten gerichteten Seite des Schwinggebildes auszugestalten. Weiter kann der Querschnitt des Schwinggebildes H-förmig sein, wobei ein Verbindungsabschnitt die mindestens zwei Kontaktelemente miteinander verbindet. Wiederum weiter kann das Schwinggebilde quer zur Transportrichtung verlaufende Ausnehmungen aufweisen.

Ferner kann das Schwinggebilde an dessen Anfang und/oder an dessen Ende jeweils eine Strinfläche aufweisen, die sich in ihrer Breite über die maximale Ausdehnung der Kontaktzone quer zur Transportrichtung ausdehnt, und dass diese Stirnfläche als eine zum Körperinnern gerichtete Ausnehmung ausgebildet ist. Solche konkav ausgebildete Ausfräsungen ermöglichen einen näheren Anschluss an die Zuführ- und/oder Abführeinrichtung, welche wie oben beschrieben üblicherweise um eine Rolle geführt werden. Dies führt zu einer besseren Produktführung, da die Lücken an den Bandübergängen ohne zusätzliche Bauteile geschlossen werden können.

Ferner kann der Wandler an einer zur Transportrichtung parallel verlaufende Aussenfläche des Schwinggebildes angebracht sein, oder der Wandler kann an einer zur Transportrichtung senkrecht verlaufenden Aussenfläche des Schwinggebildes angebracht sein.

Weiter ist eine Materialwahl und/oder eine Beschichtung des Schwinggebildes auf den zu transportierenden Gegenstand abgestimmt. In dieser Weiterentwicklung der Vorrichtung wird durch eine auf das Produkt abgestimmte Reibpaarung die Abbremsung weiter verringert.

In einer Transporteinheit können eine Mehrzahl von erfindungsgemässen Transportvorrichtungen angeordnet sein, wobei diese in Transportrichtung nebeneinander und/oder nacheinander angeordnet sein können.

In eine Gewichtsprüfvorrichtung einer Kontrollwaage kann die erfindungsgemässe Transportvorrichtung oder eine Transporteinheit zusammen mit einem Wägemodul mit einer Wägezelle zur Gewichtserfassung eingebaut sein. Die Transportvorrichtung, respektive die Transporteinheit ersetzt in diesem Sinne das Wägeband.

In einem Inspektionssystem zur dynamischen Qualitätsprüfung von Produkten weist das Inspektionssystem eine Inspektionsvorrichtung zur Überprüfung eines Qualitätsmerkmals eines zu prüfenden Produkts, und eine Transportvorrichtung oder eine Transporteinheit zum Transport des Produkts durch die Inspektionseinrichtung auf.

Handelt es sich bei dem Inspektionssystem um eine Kontrollwaage zur dynamischen Erfassung des Gewichts eines in einer Produktionslinie geförderten Produkts, weist die Kontrollwaage eine Gewichtsprüfvorrichtung als Inspektionsvorrichtung, eine Zuführeinrichtung zum Zuführen der Produkte zur Gewichtsprüfvorrichtung, und eine Abführeinrichtung zum Wegführen der Produkte von der Gewichtsprüfvorrichtung auf. Ist das Inspektionssystem ein optisches Inspektionssystem ist das Inspektionssystem eine Bilderfassungsvorrichtung, und bei einem Metalldetektionssystem ist es eine Metalldetektionsvorrichtung.

Einzelheiten der erfindungsgemässen Transportvorrichtung und der erfindungsgemässen Kontrollwaage ergeben sich anhand der Beschreibung der in den Zeichnungen dargestellten Ausführungsbeispiele. Es zeigen:

Fig. 1     schematisch eine dynamische Konrollwaage nach dem Stand der Technik;
Fig. 2     Schematisch eine dynamische Kontrollwaage mit einer erfindungsgemässen Transportvorrichtung;
Fig. 3     eine erste Ausgestaltung eines Schwinggebildes;
Fig. 4     eine zweite Ausgestaltung eines Schwinggebildes;
Fig. 5a    ein Schwinggebilde der ersten Ausgestaltung in Ruhestellung;
Fig. 5b    eine computergestützte Schwingungssimulation des Schwinggebilde der ersten Ausgestaltung in Stellung bei maximaler Ausdehnung der Ultraschallanregungseinheit;

Fig. 5c   eine computergestützte Schwingungssimulation des Schwinggebilde der ersten Ausgestaltung in Stellung bei maximaler Kontraktion der Ultraschallanregungseinheit;

Fig. 6a   ein Schwinggebilde der zweiten Ausgestaltung in Ruhestellung;

Fig. 6b   eine computergestützte Schwingungssimulation des Schwinggebilde der zweiten Ausgestaltung in Stellung bei maximaler Ausdehnung der Ultraschallanregungseinheit;

Fig. 6c   eine computergestützte Schwingungssimulation des Schwinggebilde der zweiten Ausgestaltung in Stellung bei maximaler Kontraktion der Ultraschallanregungseinheit;

Fig. 7   ein Modell der Geschwindigkeitsvektoren in der Gleitebene;

Fig. 8   eine Darstellung des transversalen Reibkoefizienten in Abhängigkeit des Geschwindigkeitsverhältnisses;

Fig. 9   ein Schwinggebilde der ersten Ausgestaltung im Bereich des Übergangs von einem Zuführband;

Fig. 10   eine Anwendung des Schwinggebildes der ersten Ausführungsform in einer Transporteinheit; und

Fig. 11   eine Anwendung des Schwinggebildes der zweiten Ausführungsform in einer Transporteinheit.

## Kurze Beschreibung der Zeichnungsfiguren

Merkmale mit gleicher Funktion und ähnlicher Ausgestaltung sind in der folgenden Beschreibung mit denselben Bezugszeichen versehen.

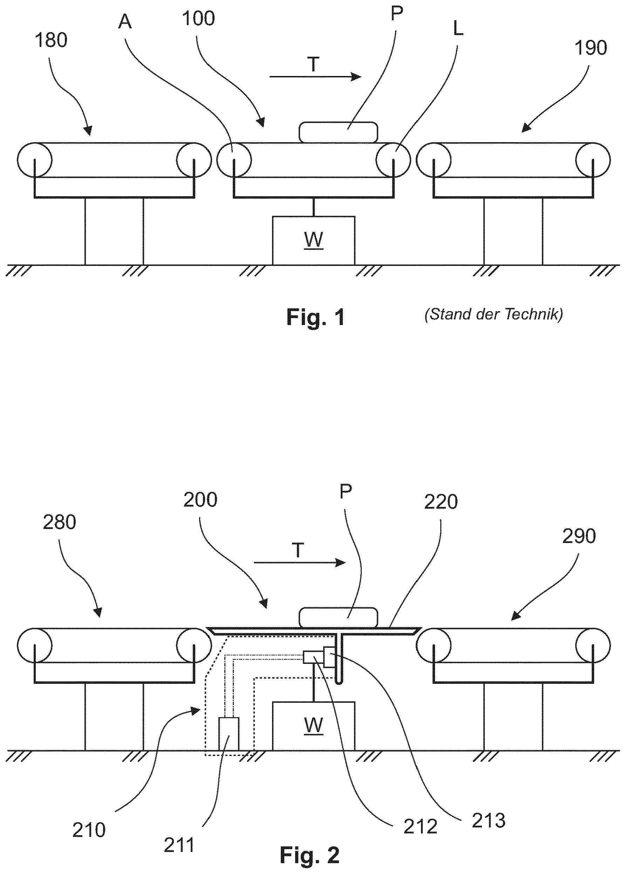

**Figur 1** zeigt schematisch eine dynamische Kontrollwaage nach dem Stand der Technik mit einer Transportvorrichtung 100, die ein eine Antriebsrolle A und mindestens eine Laufrolle L umlaufendes Förderband 120 aufweist, wobei sowohl die Antriebsrolle A als auch die Laufrolle L konstruktiv als Umlenkrollen ausgebildet sind. Vor- und Nachgeschaltet sind jeweils ein Zuführband 180, respektive ein Abführband 190. Wie aus Figur 1 zu erkennen ist, sind die Übergänge der Transportoberflächen von Band zu Band durch den Rollenradius unterbrochen. Ein überführtes Produkt P erzwingt dabei Störungen im Messsignal der Wägezelle W.

Eine dynamische Kontrollwaage mit einer erfindungsgemässen Transportvorrichtung 200 ist in **Figur 2** schematisch abgebidet. Vor- und Nachgeschaltet sind auch hier jeweils eine Zuführvorrichtung 280, respektive eine Abführvorrichtung 290. Mit der Wägezelle W ist eine Ultraschallanregungseinheit 210 verbunden, mit einem Generator 211 zur Erzeugung einer elektrischen Wechselspannung und einem Wandler 212 zur Umwandlung der elektrischen Wechselspannung in eine mechanische Schwingung. Ferner kann die Ultraschallanregungseinheit 210 mit einem Booster 213 zur Veränderung beziehungsweise Verstärkung und Übertragung der mechanischen Schwingung an ein Schwinggebilde 220 ausgestattet sein. Das vom Zuführband 280 her kommende Produkt P wird mit einer Anfangsgeschwindigkeit an die Transportvorrichtung 200 übergeben. Während der Überführung über die erfindungsgemässe Transportvorrichtung 200 wird das Gewicht des Produkts P erfasst und anschliessend mit einer Abgangsgeschwindigkeit an das Abführband übergeben. Die erfindungsgemässe Transportvorrichtung 200 besitzt keinen Antrieb im eigentlichen Sinne, sondern bedient sich der Methode der Reibungsreduzierung wie oben ausführlich beschrieben wurde. Gegenüber einer starren Gleitplatte erhöht sich so die Abgangsgeschwindigkeit, respektive verringert sich die Zeitverzögerung, was eine längere Ausgestaltung des Wägeabschnitts ermöglicht. Gerade im Bereich von tieferen Anfangsgeschwindigkeiten (bis ca. 1,5 m/s) hat die erfindungsgemässe Transportvorrichtung 200 eine bessere Wirksamkeit. Somit ist es im Gegensatz zur Verwendung einer starren Gleitplatte möglich den Produktdurchsatz zu erhöhen oder die Überführungsdistanz länger auszugestalten. Eine längere Überführungsdistanz führt einerseits zu einer genaueren Gewichtsbestimmung und andererseits können Produkte P mit längerer Auflagefläche gewogen werden, da das Produkt P während der Verwiegung vollständig im Wägeabschnitt liegen muss.

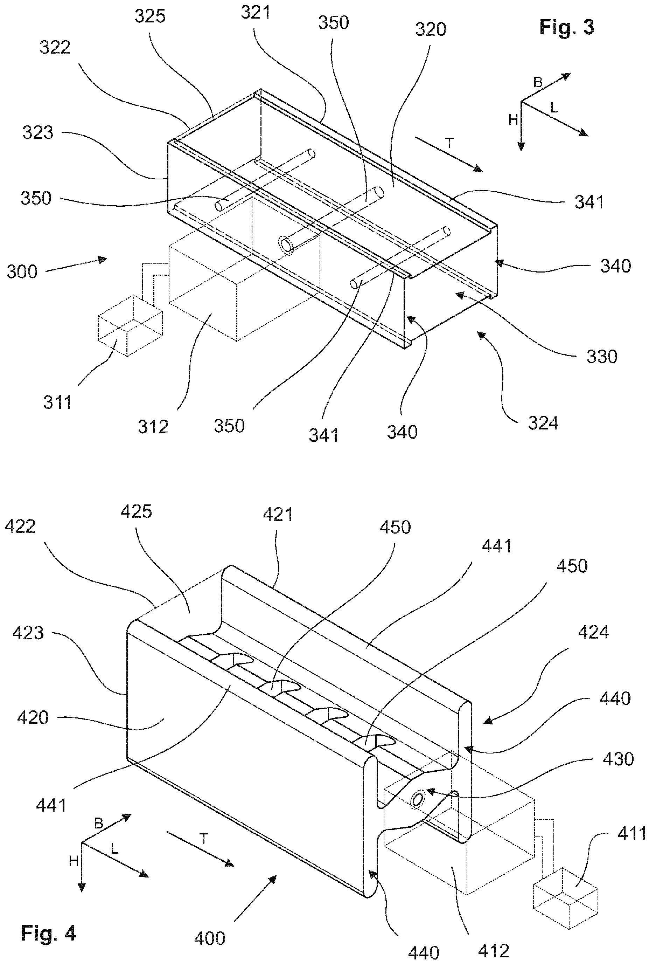

Eine Transportvorrichtung 300 mit einer ersten Ausgestaltung eines Schwinggebildes 320 ist in **Figur 3** gezeigt. Dieses ist in seiner Grundform ein Quader mit der längsten Kante 321 (Länge) parallel zur Transportrichtung T. In der Ebene senkrecht zur Transportrichtung T ist die Kante 322 (Breite), welche mit der längsten Kante 321 (Länge) die dem Produkt zugewandte Seite bildet, wenig länger als die verbleibende Kante 323 (Höhe). Der Querschnitt 324 entlang der Transportrichtung T weist einen Absatz 325 auf, so dass mittig ein Verbindungsabschnitt 330 mit beidseitig daran anschliessenden Kontaktelementen 340 ein Bereich mit kleinerer Auflagefläche gebildet wird. Auf diese Art weist das Schwinggebilde 320 eine Kontaktzone 341 auf, die vom Anfang der Transportvorrichtung bis zum Ende der Transportvorrichtung verläuft.

Ein in Richtung der Breite B - also quer zur Transportrichtung T - mit dem Schwinggebilde 320 verbundener und durch den Generator 311 gespiesener Wandler 312 überträgt deren erzeugte mechanische Schwingung auf das Schwinggebilde 320, welches wiederum derart ausgestaltet ist, dass diese übertragene Schwingung als maximale Schwingungsamplitude quer zur Transportrichtung T auftritt, vorteilhafterweise an den Kontaktzonen 341. Dies wird durch ein angepasstes Design des Schwinggebildes 320 erreicht, wie beispielsweise mittels der Geometrie des Querschnitts 324 und/oder mittels Ausnehmungen 350 und/oder mittels Festlegung der Arbeitsfrequenz des Wandlers 312 der Ultraschallanrechungseinheit.

**Figur 4** zeigt eine Transportvorrichtung 400 mit einer zweiten Ausgestaltung eines Schwinggebildes 420. Dieses ist in seiner Grundform ein Strang mit einem Querschnitt 424, welcher mit dem Umriss des Buchstabens «H» am besten beschrieben werden kann, und mit der längsten Kante 421 (Länge) parallel zur Transportrichtung T. In der Ebene senkrecht zur Transportrichtung T ist die maximale Distanz der Aussenflächen (Breite), welche mit der längsten Kante 421 (Länge) die dem Produkt zugewandte Seite bildet, in etwa gleich lang wie die verbleibende Kante 423 (Höhe). Der Querschnitt 424 weist mittig einen Verbindungsabschnitt 430 auf und beidseitig daran anschliessend jeweils ein Kontaktelement 440 auf, so dass ein Bereich mit kleinerer Auflagefläche gebildet wird. Auf diese Art weist das Schwinggebilde 420 eine Kontaktzone 441 auf, die vom Anfang der Transportvorrichtung bis zum Ende der Transportvorrichtung verläuft.

Ein in Richtung der Länge L - also parallel zur Transportrichtung T - mit dem Schwinggebilde 420 verbundener und durch den Generator 411 gespiesener Wandler 412 überträgt deren erzeugte mechanische Schwingung auf das Schwinggebilde 420, welches wiederum derart ausgestaltet ist, dass diese übertragene Schwingung als maximale Schwingungsamplitude quer zur Transportrichtung T auftritt, vorteilhafterweise an den Kontaktzonen 441. Dies wird durch ein angepasstes Design des Schwinggebildes 420 erreicht, wie beispielsweise mittels der Geometrie des Querschnitts 424 und/oder mittels Ausnehmungen 450 und/oder mittels Festlegung der Arbeitsfrequenz des Wandlers 412 der Ultraschallanrechungseinheit.

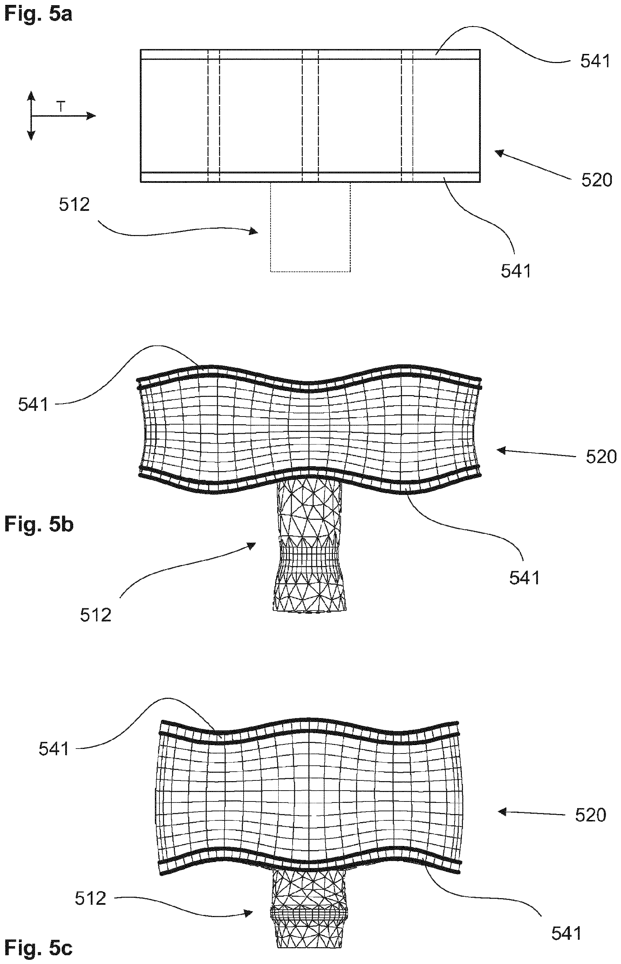

In den **Figuren 5a bis 5c** ist das Schwinggebilde 320 aus Figur 3 in der Länge-Breite-Ebene als Draufsicht dargestellt. Die **Figur 5a** zeigt das Schwinggebilde 520 in seiner Ruhestellung, erkennbar an der in Transportrichtung T parallel und gerade verlaufenden Kontaktzone 541. Die **Figuren 5b und 5c** verbildlichen eine computergestützte Schwingungssimulation in den jeweiligen Arbeitspunkten des Wandlers 512 bei maximaler Ausdehnung (Figur 5b) und maximaler Kontraktion **(Figur 5c).** Durch jeweils vier dickere Linien wird die Auswirkung der Schwingungsübertragung auf das Schwinggebilde 520 verdeutlicht. Wie daraus ersichtlich ist tritt die maximale Schwingungsamplitude quer zur Transportrichtung T auf.

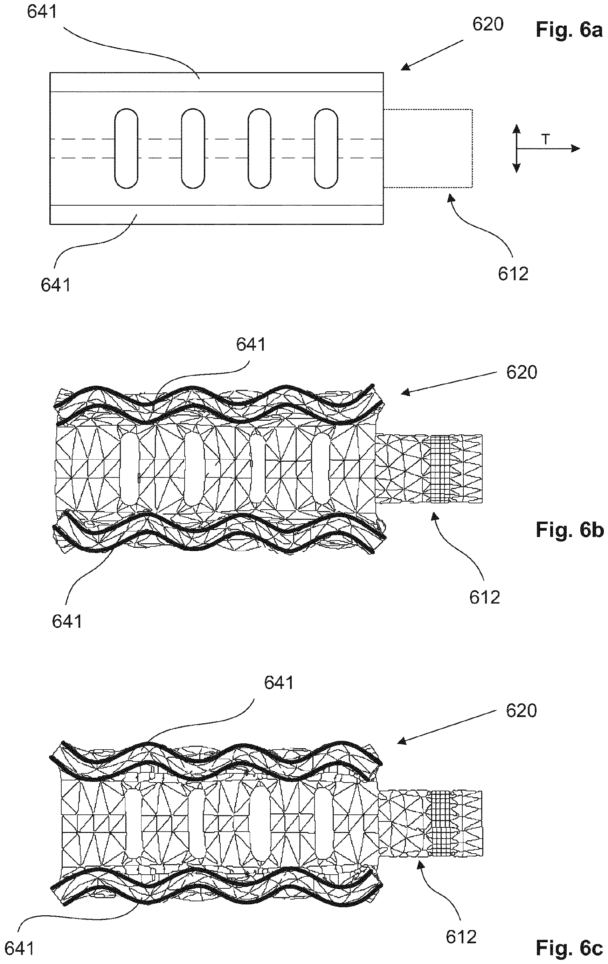

In den **Figuren 6a bis 6c** ist das Schwinggebilde 420 aus Figur 4 in der Länge-Breite-Ebene als Draufsicht dargestellt. Die **Figur 6a** zeigt das Schwinggebilde 620 in seiner Ruhestellung, erkennbar an der in Transportrichtung T parallel und gerade verlaufende Kontaktzone 641. Die **Figuren 6b und 6c** verbildlichen eine computergestützte Schwingungssimulation in den jeweiligen Arbeitspunkten des Wandlers 612 bei maximaler Ausdehnung **(Figur 6b)** und maximaler Kontraktion **(Figur 6c).** Durch jeweils vier dickere Linien wird die Auswirkung der Schwingungsübertragung auf das Schwinggebilde 620 verdeutlicht. Wie daraus ersichtlich ist tritt die maximale Schwingungsamplitude quer zur Transportrichtung T auf.

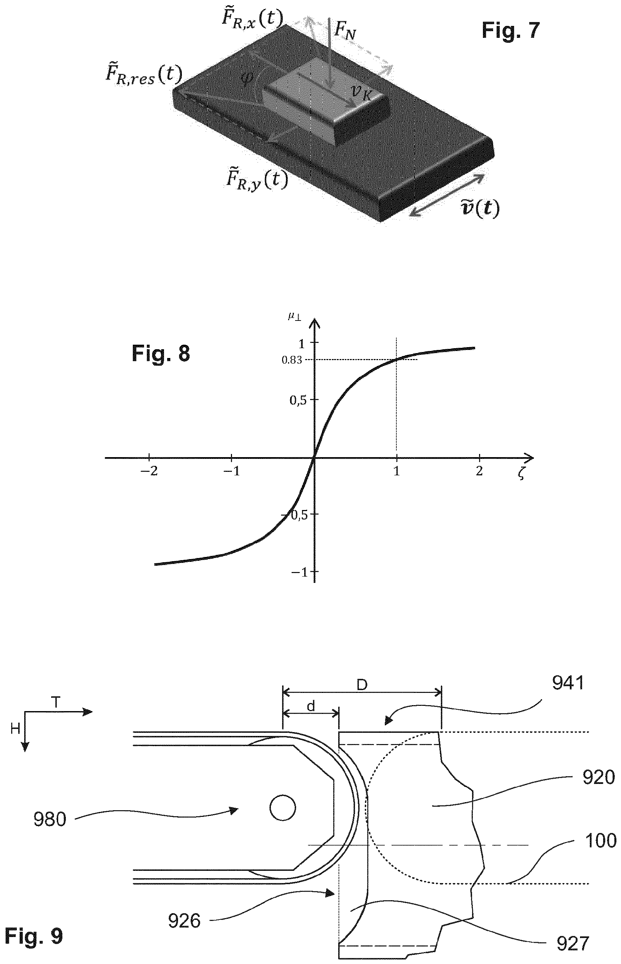

Tritt die Oszillationsbewegung quer zur Transportrichtung T auf, ist diese im Fall der transversalen Überlagerung stets senkrecht zur Gleitrichtung (Bewegungsrichtung) des Produkts P. Durch die Überlagerung der Geschwindigkeitsvektoren in der Gleitebene (siehe **Figur 7**) ändert sich permanent die Richtung der resultierenden Momentanreibkraft $\tilde{F}_{R,res}(t)$. Der Betrag bleibt jedoch immer gleich gross, sodass sich die Reibungsanteile in X- und Y-Richtung ändern. Folglich kann die Reibungskomponente, welche der ursprünglichen Bewegungsrichtung entgegenwirkt, ausgedrückt werden durch:

$$\tilde{F}_{R,x}(t) = F_R \times \cos\varphi$$

Der Effekt der Reibungsreduktion durch die Überlagerung mit den Schwingungen im Ultraschallbereich lässt sich durch die mittlere Reibkraft im Verhältnis zur Reibkraft ohne Einfluss von Ultraschallschwingungen darstellen. Diese Kennzahl wird nachfolgend durch den transversalen Reibungskoeffizienten

$$\mu_\perp = \frac{\tilde{F}_{R,x}}{F_R}$$

beschrieben. Anders als im Fall einer Oszillation parallel zur Gleitrichtung ist die mittlere Reibkraft stets geringer als die Reibung ohne Ultraschalleinfluss ist. Der transversale Reibkoeffizient bleibt somit ebenfalls kleiner als Eins.

Eine weitere wichtige Grösse zur Charakterisierung des Reibvorgangs ist das Verhältnis der Produktgeschwindigkeit $v_K$ zur maximalen Geschwindigkeitsamplitude der oszillierenden Schwingung $\hat{v}$:

$$\zeta = \frac{v_K}{\hat{v}}$$

**Figur 8** stellt den transversalen Reibkoeffizienten in Abhängigkeit des Geschwindigkeitsverhältnisses dar und zeigt ferner, dass sogar bei einem Geschwindigkeitsverhältnis von Eins ($\zeta = 1$) der transversale Reibungskoeffizient mit 0,83 um 17% kleiner ist als der Reibungskoeffizient ohne transversale Oszillation.

Anhand der **Figur 9** wird gezeigt wie die Bandübergänge verbessert werden. In Transportrichtung T anschliessend an die Zuführeinrichtung 980 ist das Schwinggebilde 920 angeordnet. Die Stirnfläche 926 welche der Zuführeinrichtung 980 zugerichtet ist, weist eine zum Körperinnern gerichtete Ausnehmung 927 auf, so dass die Kontaktzone 941 über das eigentliche Ende der Zuführeinrichtung 980, die Laufrolle, hinüberreicht. Die Distanz D des nicht-unterstützten Transportwegs kann somit wesentlich verringert werden, je nach Ausgestaltung der Ausnehmung 927 in deren Tiefe in Transportrichtung T. Zum Vergleich ist eine Transportvorrichtung 100 nach Stand der Technik durch gestrichelte Linien überlagert. Die verkürzte Distanz d beträgt vorteilhafterweise weniger als 50% der Distanz D des nicht-unterstützten Transportwegs einer Transportvorrichtung 100 mit gleichem Rollendurchmesser wie die der Zuführeinrichtung 980 . Das hier gezeigte Prinzip kann analog an der Stirnfläche zu einer Abführeinrichtung wie auch an den Stirnflächen eines Schwinggebildes aus der Figur 4 angewendet werden.

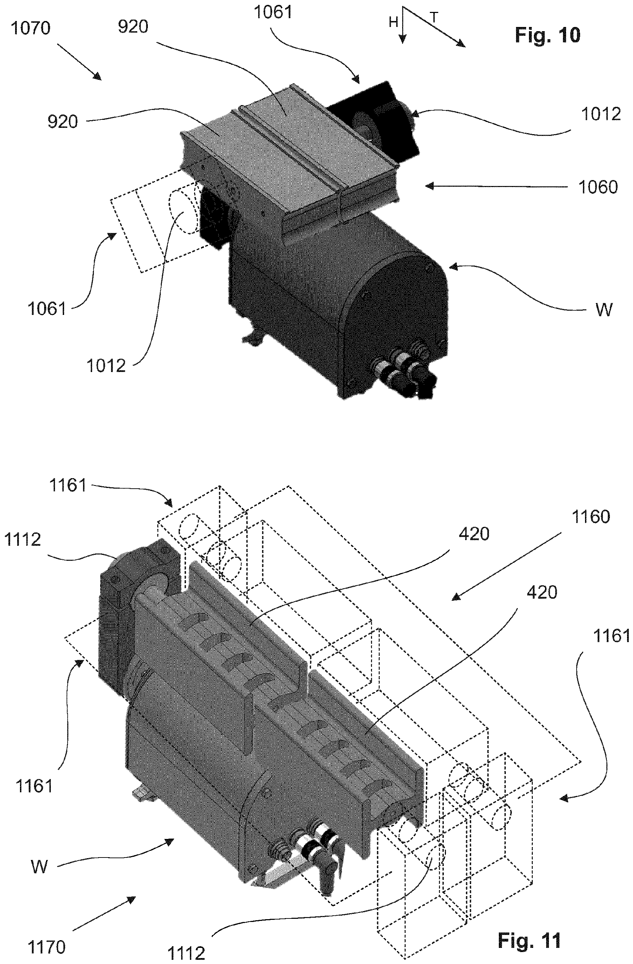

Die Anwendung des Schwinggebildes der ersten Ausführungsform in einer Transporteinheit 1060 ist in **Figur 10** zusammen mit einer Wägezelle W als Gewichtsprüfvorrichtung 1070 gezeigt. Diese weist eine Mehrzahl von Transportvorrichtungen - hier zwei - auf, wobei die Transportvorrichtungen in Transportrichtung T nebeneinander angeordnet sind. Zur Montage an die Wägezelle W dient eine Montagevorrichtung 1061, an welche jeweils seitlich ein Wandler 1012 montiert ist, und an diesen wiederum die Schwinggebilde 920 (aus Figur 9) montiert sind.

Die Anwendung des Schwinggebildes der zweiten Ausführungsform in einer Transporteinheit 1160 ist in **Figur 11** zusammen mit einer Wägezelle W als Gewichtsprüfvorrichtung 1170 gezeigt. Diese weist eine Mehrzahl von Transportvorrichtungen - hier zwei - auf, wobei die Transportvorrichtungen in Transportrichtung T nacheinander angeordnet sind. Zur Montage an die Wägezelle W dient eine Montagevorrichtung 1161, an welche jeweils ein Wandler 1112 montiert ist, und an diesen wiederum die Schwinggebilde 420 (aus Figur 4) montiert sind. Durch weitere gestrichelte Linien überlagert ist hier noch gezeigt, wie Transportvorrichtungen in Transportrichtung T nacheinander und nebeneinander angeordnet werden könnten.

**Liste der Bezugszeichen**

| | |
|---|---|
| 100 | Transportvorrichtung nach Stand der Technik |
| 120 | Förderband |
| 180, 280, 980, 1080 | Zuführeinrichtung, Zuführband |
| 190, 290 | Abführeinrichtung, Abführband |
| 200, 300, 400 | Transportvorrichtung |
| 210 | Ultraschallanregungseinheit |
| 211,311,411 | Generator |
| 212, 312, 412, 512, 612, 1012, 1112 | Wandler |
| 213 | Booster |
| 220, 320, 420, 520, 620,920 | Schwinggebilde |
| 321, 421 | Längen-Kante |
| 322, 422 | Breiten-Kante |
| 323, 423 | Höhen-Kante |
| 324, 424 | Querschnitt |
| 325,425 | Absatz |
| 330, 430 | Verbindungsabschnitt |
| 340, 440 | Kontaktelemente |
| 341, 441, 541, 641, 941 | Kontaktzone |
| 350, 450 | Ausnehmungen |
| 926 | Stirnfläche |
| 927 | Ausnehmung an der Stirnfläche |
| 1060, 1160 | Transporteinheit |
| 1061, 1161 | Montagevorrichtung |
| 1070, 1170 | Gewichtsprüfvorrichtung |
| 1080, 1180 | Anbindungsvorrichtung |
| P | Produkt |
| A | Antriebsrolle |
| L | Laufrolle |
| T | Transportrichtung |
| W | Wägezelle |
| L | Länge |

| B | Breite |
| H | Höhe |
| D | Distanz des nicht-unterstützten Transportwegs bei Verwendung einer Transportvorrichtung 100 nach Stand der Technik |
| d | Distanz des nicht-unterstützten Transportwegs bei Verwendung eines Schwinggebildes |

**Patentansprüche**

1. Transportvorrichtung (200, 300, 400) zum Transport von Produkten (P) aufweisend:

   eine Ultraschallanregungseinheit (210) mit

      einem Generator (211, 311, 411) zur Erzeugung einer elektrischen Wechselspannung und
      einem Wandler (212, 312, 412, 512, 612, 1012, 1112) zur Umwandlung der elektrischen Wechselspannung in eine mechanische Schwingung; und aufweisend

   mindestens ein Schwinggebilde (220, 320, 420, 520, 620, 920), welches eine Kontaktzone (341, 441, 541, 641) aufweist über die die Produkte (P) von einem Anfang der Transportvorrichtung (200, 300, 400) in Transportrichtung (T) an das Ende der Transportvorrichtung (200, 300, 400) transportiert werden;
   **dadurch gekennzeichnet, dass**
   das Schwinggebilde (220, 320, 420, 520, 620, 920) derart ausgestaltet und mit der Ultraschallanregungseinheit (210) verbunden ist, dass die Schwingungsamplituden der von der Ultraschallanregungseinheit (210) übertragenen mechanischen Schwingung an der Kontaktzone (341, 441, 541, 641, 941) quer zur Transportrichtung (T) auftreten.

2. Transportvorrichtung nach Anspruch 1, **dadurch gekennzeichnet, dass** die Ultraschallanregungseinheit (210) ferner einen Booster (213) zur Veränderung und Übertragung der mechanischen Schwingung aufweist, wobei der Booster (213) zwischen dem Wandler (212, 312, 412, 512, 612, 1012, 1112) und dem Schwinggebilde (220, 320, 420, 520, 620, 920) angeordnet ist.

3. Transportvorrichtung nach einem der Ansprüche 1 oder 2, **dadurch gekennzeichnet, dass** die Kontaktzone (341, 441, 541, 641, 941) des Schwinggebildes (220, 320, 420, 520, 620, 920) als mindestens zwei in Transportrichtung (T) verlaufende, vorzugsweise kufenförmige, Kontaktelemente (340, 440) ausgestaltet ist.

4. Transportvorrichtung nach einem der Ansprüche 1 bis 3, **dadurch gekennzeichnet, dass** die Kontaktelemente (340, 440) sowohl zu der dem Gegenstand zugewandten, oberseitig liegenden Kontaktzone (341, 441, 541, 641, 941), wie auch zu einer nach unten gerichteten Seite des Schwinggebildes (220, 320, 420, 520, 620, 920) ausgestaltet sind.

5. Transportvorrichtung nach einem der Ansprüche 1 bis 4, **dadurch gekennzeichnet, dass** der Querschnitt des Schwinggebildes (220, 320, 420, 520, 620, 920) H-förmig ist, wobei ein Verbindungsabschnitt (330, 430) die mindestens zwei Kontaktelemente (340, 440) miteinander verbindet.

6. Transportvorrichtung nach einem der Ansprüche 1 bis 5, **dadurch gekennzeichnet, dass** das Schwinggebilde (220, 320, 420, 520, 620, 920) quer zur Transportrichtung verlaufende Ausnehmungen (350, 450) aufweist.

7. Transportvorrichtung nach einem der Ansprüche 1 bis 6, **dadurch gekennzeichnet, dass** das Schwinggebilde (220, 320, 420, 520, 620, 920) an dessen Anfang und/oder an dessen Ende jeweils eine Strinfläche (926) aufweist, die sich in ihrer Breite über die maximale Ausdehnung der Kontaktzone (341, 441, 541, 641, 941) quer zur Transportrichtung (T) ausdehnt, und dass diese Stirnfläche (926) als eine zum Körperinnern gerichtete Ausnehmung (927) ausgebildet ist.

8. Transportvorrichtung nach einem der Ansprüche 1 bis 7, **dadurch gekennzeichnet, dass**

   der Wandler (312, 512, 1012) an einer zur Transportrichtung (T) parallel verlaufende Aussenfläche des Schwinggebildes (220, 320, 520, 920) angebracht ist, oder dass

der Wandler (212, 412, 612, 1112) an einer zur Transportrichtung (T) senkrecht verlaufende Aussenfläche des Schwinggebildes (220, 420, 620, 920) angebracht ist.

9. Transportvorrichtung nach einem der Ansprüche 1 bis 8, **dadurch gekennzeichnet, dass** eine Materialwahl und/oder eine Beschichtung des Schwinggebildes (220, 320, 420, 520, 620, 920) auf das zu transportierende Produkt (P) abgestimmt ist.

10. Transporteinheit (1060, 1160) aufweisend:
    eine Mehrzahl von Transportvorrichtungen (200, 300, 400) nach einem der Ansprüche 1 bis 9, wobei die Transportvorrichtungen (200, 300, 400) in Transportrichtung (T) nebeneinander und/oder nacheinander angeordnet sind.

11. Gewichtsprüfvorrichtung (1070, 1170) für eine Kontrollwaage aufweisend:

    ein Wägemodul mit einer Wägezelle (W) zur Gewichtserfassung, und
    eine Transportvorrichtung (200, 300, 400) nach einem der Ansprüche 1 bis 9, oder eine Transporteinheit (1060, 1160) nach Anspruch 10.

12. Inspektionssystem zur dynamischen Quaitätsprüfung von Produkten (P), aufweisend:

    eine Inspektionsvorrichtung zur Überprüfung eines Qualitätsmerkmals eines zu prüfenden Produkts (P), und
    eine Transportvorrichtung (200, 300, 400) nach einem der Ansprüche 1 bis 9, oder eine Transporteinheit (1010, 1110) nach Anspruch 10 zum Transport des Produkts (P) durch die Inspektionseinrichtung.

13. Inspektionssystem nach Anspruch 12, wobei das Inspektionssystem eine Kontrollwaage zur dynamischen Erfassung des Gewichts eines in einer Produktionslinie geförderten Produkts (P) ist und dabei

    eine Gewichtsprüfvorrichtung (1010, 1110) nach Anspruch 11 als Inspektionsvorrichtung,
    eine Zuführeinrichtung (180, 280, 980, 1080) zum Zuführen der Produkte (P) zur Gewichtsprüfvorrichtung (1010, 1110), und
    eine Abführeinrichtung (190, 290) zum Wegführen der Produkte (P) von der Gewichtsprüfvorrichtung (1010, 1110) aufweist.

14. Inspektionssystem nach Anspruch 12, wobei das Inspektionssystem ein optisches Inspektionssystem ist und dabei

    eine Bilderfassungsvorrichtung als Inspektionsvorrichtung,
    eine Zuführeinrichtung (180, 280, 980, 1080) zum Zuführen der Produkte (P) zur Bilderfassungsvorrichtung, und
    eine Abführeinrichtung (190, 290) zum Wegführen der Produkte (P) von der Bilderfassungsvorrichtung aufweist.

15. Inspektionssystem nach Anspruch 12, wobei das Inspektionssystem ein Metalldetektionssystem ist und dabei

    eine Metalldetektionsvorrichtung als Inspektionsvorrichtung,
    eine Zuführeinrichtung (180, 280, 980, 1080) zum Zuführen der Produkte (P) zur Metalldetektionssystem, und
    eine Abführeinrichtung (190, 290) zum Wegführen der Produkte (P) von der Metalldetektionssystem aufweist.

180  A  100  T →  P  L  190

W

## Fig. 1

(Stand der Technik)

280  200  P  T →  220  290

W

210  211  212  213

## Fig. 2

Fig. 3

325    321    350    320    Fig. 3

322

323

350

300

311    312    350    341    340    324

341    340    330

422    425    421    450    441    450

423    424

420    440

441    430

411

Fig. 4    400    440    412

**Fig. 5a**

541

520

512

541

541

520

**Fig. 5b**

541

512

541

520

512

**Fig. 5c**

641

620

**Fig. 6a**

T

641

612

641

620

**Fig. 6b**

641

612

641

620

**Fig. 6c**

641

612

$\tilde{F}_{R,x}(t)$    $F_N$      **Fig. 7**

$\tilde{F}_{R,res}(t)$    $\varphi$    $v_K$

$\tilde{F}_{R,y}(t)$    $\tilde{v}(t)$

**Fig. 8**

$\mu_\perp$

1

0,83

0,5

$-2$    $-1$    1    2    $\zeta$

$-0,5$

$-1$

T

H

980

941

920

100

D

d

926

927

**Fig. 9**

1070   920   1061   H    T   Fig. 10

920

1012

1060

1061

W

1012

1161

1112   420   1160

420

1161

1161

W

1112   Fig. 11

1170

**Europäisches Patentamt**
**European Patent Office**
**Office européen des brevets**

# EUROPÄISCHER RECHERCHENBERICHT

**Nummer der Anmeldung**

EP 20 21 3064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>Y<br>A | US 5 810 155 A (HASHIMOTO YOSHIKI [JP] ET AL) 22. September 1998 (1998-09-22)<br>* Zusammenfassung; Abbildungen 2,3,11,28,29,35,39 *<br>* Spalte 1, Zeilen 10-17 *<br>* Spalte 3, Zeilen 7-51 *<br>* Spalte 6, Zeilen 15-30 *<br>* Spalte 10, Zeilen 39-51 *<br>* Spalte 14, Zeilen 42-53 *<br>----- | 1-6,8-10<br><br>11-15<br>7 | INV.<br>G01G15/00<br>B65G54/02 |
| X<br><br>Y | WO 2010/131509 A1 (TOKYO INST TECH [JP]; KOYAMA DAISUKE [JP]; NAKAMURA KENTARO [JP]) 18. November 2010 (2010-11-18)<br>* Zusammenfassung; Abbildungen 1,3,4,16 *<br>----- | 1<br><br>11-15 | |
| X<br><br>Y | EP 1 484 269 A1 (IAI CORP [JP])<br>8. Dezember 2004 (2004-12-08)<br>* Zusammenfassung; Abbildungen 1,31 *<br>* Absätze [0008], [0044], [0047], [0049], [0051], [0052], [0054], [0083], [0087], [0166], [0185], [0186], [0200], [0207] *<br>----- | 1<br><br>11-15 | |
| Y | GB 1 180 030 A (ROSE FORGROVE LTD)<br>4. Februar 1970 (1970-02-04)<br>* Seite 1, Zeilen 57-62; Abbildung 1 *<br>* Seite 2, Zeilen 47-51 *<br>----- | 11-15 | **RECHERCHIERTE SACHGEBIETE (IPC)**<br><br>G01G<br>B65G |

Der vorliegende Recherchenbericht wurde für alle Patentansprüche erstellt

| Recherchenort | Abschlußdatum der Recherche | Prüfer |
|---|---|---|
| Den Haag | 28. Mai 2021 | Mihai Vasile |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 3064

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2021

| Im Recherchenbericht angeführtes Patentdokument | Datum der Veröffentlichung | Mitglied(er) der Patentfamilie | Datum der Veröffentlichung |
|---|---|---|---|
| US 5810155 A | 22-09-1998 | US 5810155 A<br>US 5890580 A | 22-09-1998<br>06-04-1999 |
| WO 2010131509 A1 | 18-11-2010 | JP 5483239 B2<br>JP 2011062068 A<br>JP WO2010131509 A1<br>WO 2010131509 A1 | 07-05-2014<br>24-03-2011<br>01-11-2012<br>18-11-2010 |
| EP 1484269 A1 | 08-12-2004 | AU 2003211895 A1<br>CN 1642833 A<br>EP 1484269 A1<br>JP 4494019 B2<br>JP WO2003076313 A1<br>KR 20040096614 A<br>US 2005217978 A1<br>WO 03076313 A1 | 22-09-2003<br>20-07-2005<br>08-12-2004<br>30-06-2010<br>07-07-2005<br>16-11-2004<br>06-10-2005<br>18-09-2003 |
| GB 1180030 A | 04-02-1970 | CH 450747 A<br>DE 1549247 A1<br>GB 1180030 A | 31-01-1968<br>11-12-1969<br>04-02-1970 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1952104 A1
- WO 2007057000 A1
- WO 2008151609 A1
- DE 202012008090 U1
- EP 2724126 B1
- DE 102007016840 A1

- DE 10039482 A1
- US 5810155 A
- DE 19916922
- DE 19916923
- DE 19916856
- DE 19916872